# FASCICULE DE BREVET EUROPEEN

(11) **EP 1 938 717 B1**
(45) Date de publication et mention de la délivrance du brevet: **25.08.2010**
(21) Numéro de dépôt: 07291604.2
(22) Date de dépôt: 21.12.2007
(51) Int. Cl.: A47J 27/08

(54) **Appareil de cuisson sous pression muni d'un verrou**
Druckkochgerät mit einer Verriegelung
Pressure-cooking device provided with a bolt

(30) Priorité: 28.12.2006 FR 0611477
(43) Date de publication de la demande: 02.07.2008
(73) Titulaire: SEB S.A., 69132 Ecully Cedex (FR)
(72) Inventeur: Chameroy, Eric, 21260 Veronnes (FR); Seurat Guiochet, Claire Marie-Aurore, 21490 Bretigny (FR)
(74) Mandataire: Martin, Didier Roland Valéry

(56) Documents cités:
- WO-A-2006/056253
- FR-A- 757 093
- FR-A- 1 132 088
- GB-A- 323 810

## Description

La présente invention se rapporte au domaine technique général des appareils de cuisson d'aliments, notamment de nature domestique, destinés à former une enceinte de cuisson hermétique au sein de laquelle sont cuits les aliments sous pression de vapeur.

La présente invention concerne plus particulièrement un appareil de cuisson sous pression à couvercle rentrant comprenant au moins :
- une cuve et un couvercle conçu pour être rapporté dans la cuve avec une faculté de mobilité entre au moins d'une part une position de fermeture dans laquelle il forme avec la cuve une enceinte de cuisson sensiblement étanche, et d'autre part une position d'ouverture dans laquelle il permet la communication de l'intérieur de l'enceinte avec l'extérieur,
- un moyen de commande du déplacement du couvercle entre ses positions de fermeture et d'ouverture, ledit moyen de commande étant monté mobile entre au moins une première position correspondant à la position de fermeture du couvercle et une deuxième position correspondant à la position d'ouverture du couvercle,

Les appareils de cuisson sous pression, en particulier à usage domestique, du genre autocuiseur, sont bien connus dans l'art antérieur, comme divulgué dans le document WO 2006/056253.

De tels appareils comprennent généralement une cuve et un couvercle destiné à être rapporté sur la cuve pour former une enceinte de cuisson hermétiquement close au sein de laquelle sont placés les aliments à cuire. L'intérieur de l'enceinte peut ainsi atteindre des pression et température élevées lorsque l'appareil est soumis à l'influence d'une source de chauffe.

Il existe différents moyens pour réaliser un verrouillage hermétique réversible du couvercle sur la cuve.

On connaît en particulier des appareils de cuisson sous pression mettant en oeuvre:
- une cuve constituée d'un fond à partir et à la périphérie duquel s'élève une paroi latérale se terminant par un bord rentrant qui lui-même s'étend, à partir de la paroi latérale, de façon centripète vers l'intérieur de la cuve ; ledit bord rentrant délimite une ouverture d'accès à l'intérieur de la cuve et présente une face interne située en regard de l'intérieur de la cuve ;
- et un couvercle destiné à être introduit à l'intérieur de la cuve, sous la face interne du bord rentrant, pour venir ensuite être hermétiquement plaqué contre ladite face interne, réalisant ainsi avec la cuve une enceinte de cuisson étanche.

De tels appareils sont habituellement désignés dans le domaine technique sous l'appellation « *autocuiseurs à couvercle rentrant* », dans la mesure où ils mettent en oeuvre un couvercle qui doit d'abord être rentré dans la cuve avant de venir en contact étanche avec le rebord supérieur centripète de cette dernière.

Il existe de surcroît différentes technologies d'autocuiseurs à couvercle rentrant.

On connaît ainsi les autocuiseurs « *à trou d'homme* », qui mettent en oeuvre d'une part une cuve dont le bord supérieur rentrant délimite une ouverture ovale et d'autre part un couvercle de forme conjuguée ovale.

Cette conjugaison de formes ovales permet d'introduire entièrement le couvercle à l'intérieur de la cuve, puis, une fois qu'il est positionné sous le bord rentrant centripète, de l'aligner avec l'ouverture de cuve pour qu'il vienne se plaquer de manière étanche contre ledit bord rentrant.

La conception de ces appareils « *à trou d'homme* » interdit bien entendu par nature l'utilisation de couvercles circulaires.

Il existe toutefois des autocuiseurs à couvercle rentrant permettant la mise en oeuvre de couvercles circulaires. Ces appareils sont généralement connus sous l'appellation « *autocuiseurs à couvercle flexible* ». Ces appareils sont basés sur le principe de l'utilisation d'un couvercle capable de passer, sous l'effet d'une sollicitation mécanique en flexion, d'une configuration géométrique de repos permettant l'introduction du couvercle dans la cuve, à une configuration géométrique déformée permettant de réaliser la fermeture hermétique de la cuve.

On connaît ainsi un autocuiseur à couvercle flexible comprenant une cuve dont le bord rentrant délimite une ouverture de cuve circulaire et un couvercle obtenu à partir d'un flan métallique circulaire roulé. Dans sa configuration de repos, le couvercle présente une forme de disque « *roulé* », c'est à dire cintré, qui lui permet d'être introduit au sein de la cuve sous le bord rentrant. Dans sa configuration déformée le couvercle présente une forme de disque sensiblement plat, qui lui permet de venir en appui continu et uniforme contre la face interne du bord rentrant, de façon à former une enceinte étanche. A cet effet, le bord rentrant de la cuve est équipé, dans la zone de contact avec le couvercle, d'un joint d'étanchéité annulaire. Cet appareil à couvercle flexible connu est également doté d'une part d'un moyen de commande du déplacement du couvercle comprenant un levier monté pivotant sur une fourche solidaire du couvercle et d'autre part d'un étrier monté librement mobile relativement à la fourche et destiné à venir en appui contre la cuve, à l'extérieur de cette dernière, au-dessus du bord rentrant centripète. Le levier prend appui sur l'étrier par l'intermédiaire d'une came pour exercer un effort de traction sur le centre du couvercle permettant de rapprocher le couvercle de l'étrier.

Le fonctionnement de cet autocuiseur connu est le suivant.

Le couvercle, dans sa configuration de repos, est introduit à l'intérieur de la cuve sous le bord rentrant de cette dernière, tandis que l'étrier vient en appui sur et contre la cuve, au-dessus dudit bord rentrant. L'utilisateur actionne alors le levier en rotation ce qui a pour effet d'exercer sur le centre du couvercle un effort de rapprochement du couvercle et de l'étrier, ce dernier restant fixe en position. Le couvercle vient alors en appui contre et sous le bord rentrant de la cuve et se déforme en flexion jusqu'à atteindre sa configuration déformée, dans laquelle sa périphérie est uniformément plaquée contre le bord rentrant de la cuve, ce qui permet de réaliser une enceinte de cuisson étanche. L'utilisateur soumet ensuite l'enceinte de cuisson étanche ainsi formée à une source de chaleur, de manière à augmenter la température et la pression régnant au sein de l'enceinte et cuire les aliments présents dans l'enceinte sous pression de vapeur.

De plus, afin de prévenir toute ouverture intempestive de l'enceinte pendant le processus de cuisson, ce qui pourrait conduire à un échappement brutal du couvercle avec toutes les conséquences désastreuses qui pourraient s'ensuivre, il est connu d'équiper le couvercle de cet appareil de l'art antérieur d'un moyen de sécurité à l'ouverture. Un tel moyen est conçu pour bloquer le levier en position lorsque la pression régnant à l'intérieur de l'enceinte excède un niveau prédéterminé de sécurité. Ce moyen de sécurité à l'ouverture comprend un doigt de sécurité monté à coulissement vertical sur le couvercle. Tant que la pression régnant à l'intérieur de l'enceinte est inférieure ou égale au niveau prédéterminé, le doigt reste en position basse sous l'effet de son propre poids. Dès que la pression régnant dans l'enceinte excède le niveau prédéterminé de sécurité, le doigt monte et vient s'introduire dans un logement directement ménagé dans le levier. Lorsque le doigt est introduit dans le logement, il exerce une action de blocage mécanique qui empêche la rotation du levier, et donc l'ouverture du couvercle.

Cet appareil de l'art antérieur, s'il donne généralement satisfaction, n'en présente pas moins un certain nombre d'inconvénients.

Ainsi, bien que la cuve de cet appareil connu soit équipée d'une paire de poignées destinée spécifiquement à permettre la préhension manuelle de l'appareil par son utilisateur, ce dernier est habituellement intuitivement conduit à saisir manuellement l'appareil fermé directement par le levier de commande de déplacement du couvercle, sans utiliser les poignées *ad hoc* montées sur la cuve. Cette utilisation impropre du levier provient en particulier de la position centrale élevée qu'occupe ledit levier sur l'appareil lorsque ce dernier forme l'enceinte de cuisson. L'utilisateur est d'autant plus incité à utiliser le levier comme une poignée de manutention que la longueur de ce dernier est importante, ce qui est nécessaire compte-tenu de la fonction première du levier (exercer un effort de traction sur le couvercle suffisant pour déformer ce dernier en flexion). Cette utilisation du levier en tant qu'organe de préhension peut être de nature à poser des problèmes en matière d'utilisation de l'appareil, de fiabilité, voire même de sécurité.

En effet, lorsqu'un utilisateur saisit et soulève un tel appareil par le levier alors que le couvercle est verrouillé sur la cuve, le poids de l'appareil peut conduire au déplacement du levier dans le sens de l'ouverture du couvercle. En d'autres termes, lorsque l'utilisateur saisit son appareil de cuisson uniquement par le levier, il s'expose au risque d'une désolidarisation soudaine du couvercle et de la cuve, qui peut s'avérer à tout le moins désagréable, surtout lorsque la cuve est remplie d'aliments à cuire.

Si le soulèvement de l'appareil par le levier est effectué alors que l'appareil est sous pression, c'est-à-dire alors que le doigt de sécurité est introduit dans le logement ménagé dans le levier, l'effort de soulèvement exercé sur le levier conduit à exercer des efforts de cisaillement et d'arrachement particulièrement importants sur le doigt de sécurité.

Par exemple, si l'appareil de cuisson est rempli d'aliments et de liquide, les efforts exercés sur le doigt correspondent approximativement au poids de l'appareil majoré par un effet de bras de levier, puisque le logement dans lequel s'introduit le doigt est situé à distance du centre de rotation du levier. C'est pourquoi, afin d'éviter tout risque de rupture du doigt de sécurité qui pourrait conduire à des conséquences particulièrement catastrophiques pour l'utilisateur, il est nécessaire de réaliser le doigt de sécurité en un matériau particulièrement résistant, selon un dimensionnement qui prend en compte un facteur de sécurité important. Ce surdimensionnement du doigt de sécurité conduit corrélativement à une augmentation du prix de revient de cet appareil de l'art antérieur. De surcroît, le risque de casse du doigt de sécurité, même s'il est infinitésimal compte-tenu du surdimensionnement adopté, ne peut, au moins de façon théorique, être complètement écarté.

De plus, des efforts importants et répétés exercés sur le doigt de sécurité peuvent malgré tout conduire à endommager ce dernier, ou du moins peuvent entraîner une détérioration de l'ajustement du doigt relativement au couvercle, avec tous les problèmes de fiabilité (perte d'étanchéité par exemple) et sécurité afférents.

Par ailleurs, la conception de ces appareils connus de l'art antérieur peut s'avérer relativement délicate à industrialiser.

En effet, compte-tenu des tolérances de fabrication relativement importantes mises en jeu, notamment au niveau du couvercle, il peut être difficile de faire coïncider de façon fiable le logement du levier, qui se déplace avec ce dernier selon une course circulaire, avec le doigt de sécurité assujetti au couvercle, dont la trajectoire est rectiligne.

Enfin, ces appareils connus ne donnent aucune indication (visuelle ou auditive) permettant à l'utilisateur de savoir que son appareil de cuisson est effectivement verrouillé. Cette absence d'indication de verrouillage peut constituer une source d'inquiétude pour l'utilisateur qui ne sait pas si son appareil est ou non correctement verrouillé.

Les objets assignés à la présente invention visent en conséquence à remédier aux différents inconvénients énumérés précédemment et à proposer un nouvel appareil de cuisson sous pression à couvercle rentrant qui, tout en étant de conception particulièrement simple et bon marché, est particulièrement facile et sûr à utiliser.

Un autre objet de l'invention vise à proposer un nouvel appareil de cuisson sous pression à couvercle rentrant dont le niveau de sécurité et d'ergonomie est particulièrement amélioré.

Un autre objet de l'invention vise à proposer un nouvel appareil de cuisson sous pression à couvercle rentrant de construction particulièrement simple et économique.

Un autre objet de l'invention vise à proposer un nouvel appareil de cuisson sous pression à couvercle rentrant permettant une gestuelle d'utilisation qui est de nature à limiter les risques d'erreurs de manipulation par l'utilisateur.

Un autre objet de l'invention vise à proposer un nouvel appareil de cuisson sous pression à couvercle rentrant qui empêche l'ouverture de l'appareil si ce dernier n'est pas posé sur un support, et ce même si l'utilisateur essaie de commander positivement l'ouverture.

Un autre objet de l'invention vise à proposer un nouvel appareil de cuisson sous pression à couvercle rentrant dont la construction permet d'optimiser la conception du doigt de sécurité sans sacrifier la sécurité de fonctionnement.

Un autre objet de l'invention vise à proposer un nouvel appareil de cuisson sous pression à couvercle rentrant qui tout en étant de construction particulièrement compacte et économique présente une fonction de sécurité à l'ouverture et une fonction de sécurité à la mauvaise fermeture.

Un autre objet de l'invention vise à proposer un nouvel appareil de cuisson sous pression à couvercle rentrant dont la fabrication se prête particulièrement bien à l'industrialisation.

Les objets assignés à l'invention sont atteints à l'aide d'un appareil de cuisson sous pression à couvercle rentrant comprenant au moins :
- une cuve et un couvercle conçu pour être rapporté dans la cuve avec une faculté de mobilité entre au moins d'une part une position de fermeture dans laquelle il forme avec la cuve une enceinte de cuisson sensiblement étanche, et d'autre part une position d'ouverture dans laquelle il permet la communication de l'intérieur de l'enceinte avec l'extérieur,
- un moyen de commande du déplacement du couvercle entre ses positions de fermeture et d'ouverture, ledit moyen de commande étant monté mobile entre au moins une première position correspondant à la position de fermeture du couvercle et une deuxième position correspondant à la position d'ouverture du couvercle,
ledit appareil étant caractérisé en ce qu'il comprend un verrou activable / désactivable conçu pour, lorsqu'il est activé, empêcher le moyen de commande de rejoindre sa deuxième position à partir de sa première position, ledit verrou étant activable indépendamment du niveau de pression régnant à l'intérieur de l'enceinte.

D'autres objets et avantages particuliers de l'invention apparaîtront plus en détails à la lecture de la description qui suit, ainsi qu'à l'aide des dessins annexés, fournis à titre purement illustratif et non limitatif, parmi lesquels :
- La figure 1 illustre, selon une vue en perspective, un appareil de cuisson à couvercle flexible conforme à l'invention avec son moyen de commande du déplacement du couvercle dans sa deuxième position, correspondant à l'ouverture du couvercle.
- La figure 2 illustre, selon une vue schématique en coupe, l'appareil de cuisson de la figure 1.
- La figure 3 illustre, selon une vue schématique en coupe, l'appareil de cuisson de la figure 1 avec son moyen de commande du déplacement du couvercle qui se trouve cette fois dans sa première position, correspondant à la fermeture du couvercle.
- La figure 4 illustre, selon une vue schématique en perspective, le couvercle de l'appareil illustré aux figures 1 à 3 sur lequel est rapporté et fixé un sous-ensemble mécanique incorporant le moyen de commande du déplacement du couvercle, ce dernier se trouvant dans sa deuxième position.
- La figure 5 illustre, selon une vue en perspective de dessus, le sous-ensemble mécanique de la figure 4, le moyen de commande du déplacement du couvercle se trouvant dans sa première position.
- La figure 6 illustre, selon une vue schématique en coupe, l'appareil de cuisson des figures 1 à 3 avec son moyen de commande du déplacement du couvercle qui se trouve cette fois dans une troisième position autorisant le déverrouillage du couvercle.
- La figure 7 illustre, selon une vue schématique en coupe, le sous-ensemble mécanique de la figure 5, le moyen de commande de déplacement du couvercle se trouvant dans une position intermédiaire entre sa première et sa deuxième position.
- Les figures 8 et 9 illustrent, selon respectivement une vue schématique en perspective et une vue de dessus, un détail de réalisation du verrou de l'appareil représenté aux figures précédentes.

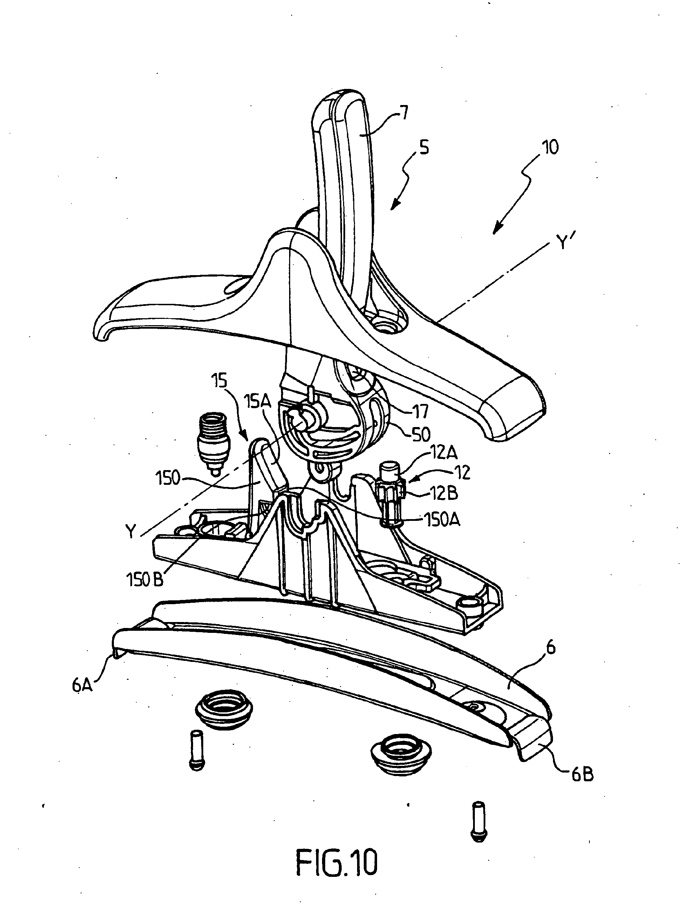

- La figure 10 représente, selon une vue éclatée, le sous-ensemble mécanique illustré aux figures 5 et 7.

L'appareil de cuisson sous pression 1 conforme à l'invention est destiné à assurer la cuisson d'aliments, sous pression de vapeur. De façon préférentielle, l'appareil de cuisson sous pression 1 est constitué par un appareil de cuisson sous pression domestique, conçu pour une utilisation dans un contexte familial. Par souci de simplicité de description, il sera exclusivement fait référence dans ce qui suit, en relation avec les dessins annexés, à un appareil 1 constitué par un tel autocuiseur domestique, étant entendu que l'invention peut toutefois également concerner des appareils de type professionnel ou semi-professionnel.

Conformément à l'invention, l'appareil 1 comprend au moins une cuve 2 qui forme un récipient de cuisson, c'est-à-dire que ladite cuve 2 est destinée à accueillir les aliments soit directement, soit par l'intermédiaire d'un panier de cuisson (non représenté) inséré dans la cuve 2 et contenant lesdits aliments. La cuve 2 présente par exemple, tel que cela est illustré aux figures, une symétrie de révolution selon un axe X-X'. Dans ce qui suit, l'adjectif « *axial* » se réfère à la direction de cet axe de symétrie X-X', direction qui s'apparente à la direction verticale lorsque l'appareil 1 est en fonctionnement normal. Bien évidemment, la cuve 2 peut tout à fait ne pas affecter une forme de révolution (et être par exemple de forme ovale), sans pour autant que l'on sorte du cadre de l'invention.

Conformément à l'invention, l'appareil de cuisson sous pression 1 comporte également au moins un couvercle 3 destiné à coopérer avec la cuve 2 pour former avec cette dernière une enceinte de cuisson.

Selon l'invention, l'appareil de cuisson 1 est un appareil à couvercle rentrant. Cela signifie que pour former, à l'aide de la cuve 2 et du couvercle 3, une enceinte étanche de cuisson, il est nécessaire d'introduire tout d'abord entièrement le couvercle 3 à l'intérieur de la cuve 2, sous le bord libre supérieur de cette dernière, ledit bord libre délimitant l'ouverture d'accès à l'intérieur de la cuve 2, puis d'imprimer audit couvercle 3 un mouvement vertical de bas en haut pour que le couvercle 3 vienne en appui étanche contre et sous ledit bord libre supérieur, pour obtenir une enceinte de cuisson hermétiquement close. Ce principe général sous-tendant la construction et le fonctionnement des appareils de cuisson sous pression à couvercle rentrant est bien connu en tant que tel.

La cuve 2 est de manière classique fabriquée à partir d'un matériau métallique tel que de l'acide inoxydable ou de l'aluminium, et comporte un fond 2A qui affecte par exemple une forme discoïde et est éventuellement pourvu d'un assemblage composite thermo-conducteur, rapporté par exemple par frappe à chaud. Comme illustré aux figures, la cuve 2 comporte une paroi latérale 2B qui, de préférence, présente une forme annulaire et s'élève à partir et à la périphérie du fond 2A. Un bord rentrant 2C s'étend de façon centripète à partir de la paroi latérale 2B. Ce bord rentrant 2C présente une face interne 20C située en regard de l'intérieur de la cuve 2, c'est à dire orientée vers le fond 2A. De préférence, tel que cela est illustré aux figures, la paroi latérale 2B s'étend entre une extrémité inférieure 20B reliée à la périphérie du fond 2A et une extrémité supérieure 21B prolongée par le bord rentrant 2C, lequel converge radialement vers le centre de la cuve 2, c'est à dire en direction de l'axe X-X'.

De préférence, le bord rentrant 2C comprend un tronçon sensiblement conique 21C qui s'étend dans le prolongement de la paroi latérale 2B, ledit tronçon conique 21C se terminant par un bord roulé 22C ménageant un logement destiné à accueillir un joint d'étanchéité annulaire 4, lequel vient habiller la face interne 20C du bord rentrant 2C. Le bord rentrant centripète 2C délimite une ouverture d'accès à l'intérieur de la cuve 2, par laquelle peuvent être introduits non seulement les aliments à cuire, mais également le couvercle 3.

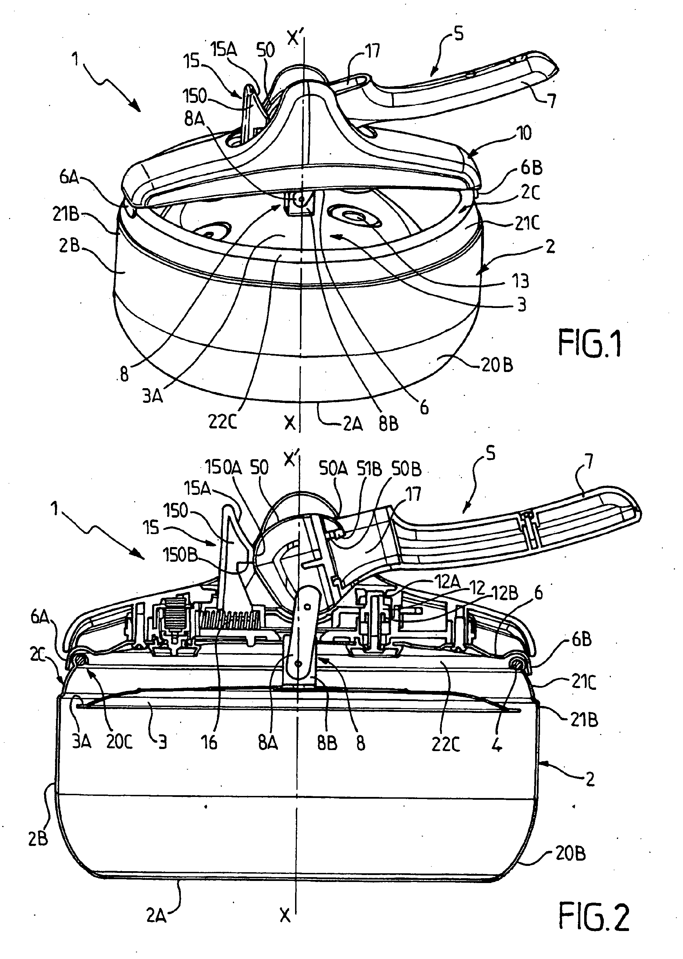

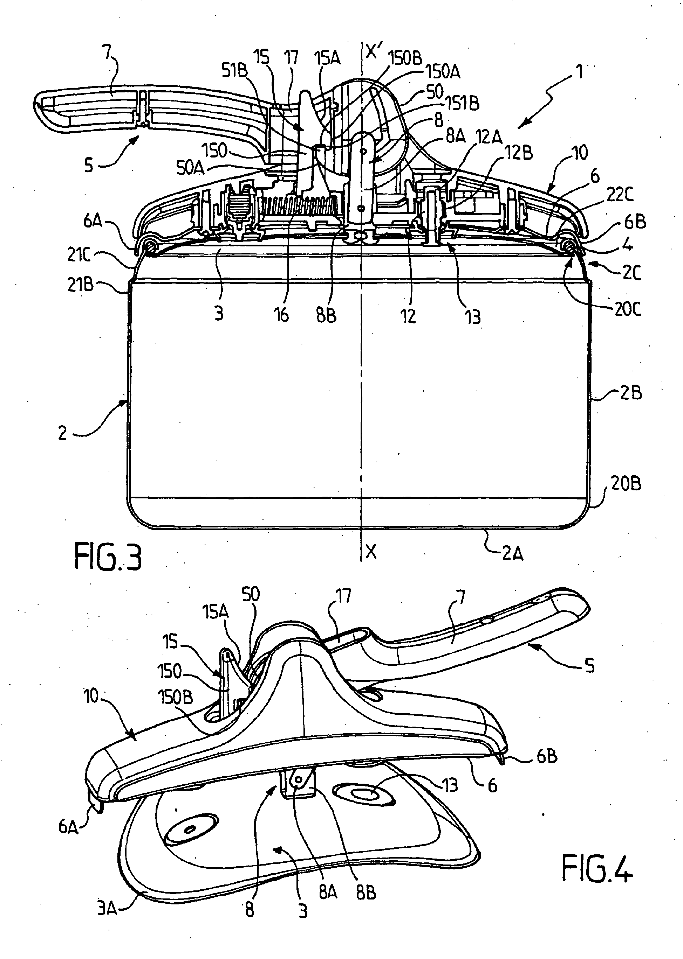

Conformément à l'invention, le couvercle 3 est conçu pour être rapporté dans la cuve 2 avec une faculté de mobilité entre au moins :
- d'une part une position de fermeture (illustrée à la figure 3) dans laquelle il forme avec la cuve 2 une enceinte de cuisson sensiblement étanche, c'est à dire suffisamment hermétique pour permettre une montée en pression en son sein,
- et d'autre part une position d'ouverture (illustrée aux figures 1 et 2), dans laquelle il permet la communication de l'intérieur de l'enceinte avec l'extérieur, de façon à ce que la pression régnant dans l'enceinte corresponde sensiblement à la pression atmosphérique.

En d'autres termes, conformément à l'invention, le couvercle 3 peut être rapporté dans la cuve 2, c'est à dire être inséré à l'intérieur de cette dernière, selon un positionnement prédéterminé, positionnement dans lequel il conserve une possibilité de se déplacer de façon contrôlée entre ses positions de fermeture et d'ouverture.

Dans le mode de réalisation illustré aux figures, lorsque le couvercle 3 se trouve en position de fermeture, il vient en contact sensiblement étanche, par sa face supérieure 3A, contre la face interne 20C du bord rentrant 2C. Au contraire, lorsque le couvercle 3 se trouve en position d'ouverture, il se trouve à distance du bord rentrant 2C, empêchant ainsi toute montée en pression de l'enceinte. Le passage de la position d'ouverture à la position de fermeture (et vice versa) s'effectue préférentiellement par un mouvement de translation verticale du couvercle 3 de bas en haut (respectivement de haut en bas).

Afin de rapporter le couvercle 3 dans la cuve 2, l'appareil 1 conforme à l'invention comprend avantageusement un sous-ensemble 10 relié mécaniquement au couvercle 3, ledit sous-ensemble 10 étant destiné à venir reposer en appui contre et sur la cuve 2. Le couvercle 3 est monté mobile relativement au sous-ensemble 10 entre deux positions extrêmes qui, lorsque le sous-ensemble 10 repose de façon fixe et immobile contre le bord de cuve 22C (tel qu'illustré à la figure 1), correspondent respectivement aux positions d'ouverture et de fermeture. Au sens de l'invention, on considère donc que le couvercle 3 est rapporté dans la cuve 2 lorsqu'une pièce d'accostage (formée en l'occurrence par le sous-ensemble 10) reliée au couvercle 3 vient s'immobiliser en appui contre la cuve 2, le couvercle 3 se trouvant alors prépositionné au sein de la cuve 2, sous le bord rentrant 2C, avec une possibilité de se déplacer relativement à ladite pièce d'accostage et à la cuve.

Dans ce qui suit, on s'attachera exclusivement, pour des raisons de simplicité de description, à décrire un autocuiseur à couvercle rentrant pourvu d'un couvercle 3 déformable, c'est-à-dire dont la forme peut être modifiée par application d'une sollicitation mécanique commandée par l'utilisateur. L'invention n'est toutefois pas limitée à un type particulier d'autocuiseur à couvercle rentrant, et son enseignement s'applique également pleinement à d'autres types d'autocuiseurs à couvercle rentrant, et notamment aux autocuiseurs à trou d'homme.

Conformément au mode de réalisation illustré aux figures, le couvercle 3 est donc un couvercle déformable susceptible d'évoluer entre une configuration géométrique de repos (illustrée à la figure 4) permettant l'introduction du couvercle 3 dans la cuve 2 sous la face interne 20C du bord rentrant 2C et une configuration géométrique déformée (représentée notamment à la figure 3) permettant au couvercle de venir en contact sensiblement étanche contre la face interne 20C du bord rentrant 2C, cette dernière étant préférentiellement habillée par le joint d'étanchéité 4.

Afin de permettre à l'utilisateur d'ouvrir et fermer à volonté l'enceinte de cuisson, le couvercle 3 est préférentiellement un couvercle déformable de façon réversible. Cela signifie que le couvercle 3 est réalisé dans un matériau élastique et est sollicité en déformation à l'intérieur du domaine élastique dudit matériau. De façon préférentielle, le couvercle 3 est un couvercle flexible, c'est-à-dire qu'il est conçu pour changer de forme sous l'effet d'une sollicitation mécanique en flexion. Par exemple, tel que cela est bien connu en tant que tel dans l'art antérieur, le couvercle 3 est constitué d'un flan métallique discoïde qui a subi un roulage de telle sorte qu'il affecte au repos, en l'absence de sollicitation mécanique extérieure de déformation, une forme de selle, c'est à dire une forme courbe sensiblement en U (par exemple visible sur les figures 1 et 4). En d'autres termes, le couvercle 3 présente avantageusement au repos (en l'absence de sollicitation de déformation) une forme de disque cintré, qui correspond en vue de dessus à une ellipse. Grâce à cette forme gauche, ledit couvercle 3 peut être inséré à l'intérieur de la cuve 2 à travers l'orifice délimité par le bord rentrant 2C, alors que le diamètre du flan discoïde (avant cintrage) à partir duquel est constitué le couvercle 3 est supérieur à celui de l'ouverture de cuve 2. La figure 1 représente notamment le couvercle 3 alors qu'il est inséré à l'intérieur de la cuve 2, sous le bord rentrant 2C.

Conformément à l'invention, l'appareil de cuisson sous pression 1 comprend également un moyen de commande 5 du déplacement du couvercle 3 entre ses positions de fermeture et d'ouverture, ledit moyen de commande 5 étant monté mobile entre au moins une première position (illustrée notamment à la figure 3) correspondant à la position de fermeture du couvercle 3 et une deuxième position (illustrée notamment aux figures 1 et 2) correspondant à la position d'ouverture du couvercle 3.

Par exemple, dans le mode de réalisation illustré aux figures, le moyen de commande 5 du déplacement du couvercle 3 est conçu pour exercer un effort sensiblement vertical, selon l'axe X-X', ledit effort étant préférentiellement appliqué au centre du couvercle 3 et permettant de faire passer le couvercle 3 :
- de sa position d'ouverture (illustrée aux figures 1 et 2) à sa position de fermeture (illustrée à la figure 3) par traction verticale du bas vers le haut,
- et inversement, de sa position de fermeture (illustrée à la figure 3) à sa position d'ouverture (illustrée aux figures 1 et 2) par relâchement de l'effort de traction exercé, le couvercle 3 retournant en position de fermeture sous l'effet de son propre poids.

Dans le cas, illustré aux figures, d'un autocuiseur à couvercle flexible, le moyen de commande 5 exerce une double fonction, savoir une fonction de commande du déplacement du couvercle 3 et une fonction de commande de la déformation (en flexion) du couvercle 3, ces fonctions intervenant successivement. En effet, sous l'effet de l'effort de traction verticale exercé par le moyen de commande 5 au niveau du centre du couvercle 3, selon des modalités qui vont être expliquées plus en détails dans ce qui suit, le couvercle 3 va tout d'abord se déplacer globalement selon un trajet vertical parallèle à l'axe X-X' jusqu'à venir en butée, vers sa périphérie, contre le bord rentrant 2C, lequel est habillé sur sa face interne 20C par le joint annulaire d'étanchéité 4. L'effort de traction du bas vers le haut exercé par le moyen de commande 5 est alors poursuivi tandis que le couvercle 3 est en appui contre le bord rentrant 2C (par l'intermédiaire du joint d'étanchéité 4 interposé entre la face supérieure du couvercle 3 et la face inférieure 20C du bord rentrant 2C), ce qui occasionne alors une déformation élastique en flexion du couvercle 3.

Cette déformation conduit le couvercle 3 à adopter une forme de disque sensiblement plat (et non plus cintré), forme lui permettant d'épouser de façon sensiblement uniforme et continue, sur sensiblement toute sa périphérie, le bord rentrant 2C. On obtient ainsi une enceinte de cuisson suffisamment étanche pour permettre la cuisson des aliments à une pression supérieure à la pression atmosphérique. En d'autres termes, dans le mode de réalisation illustré aux figures, le moyen de commande 5 du déplacement du couvercle 3 commande non seulement le déplacement proprement dit du couvercle 3 mais également le passage dudit couvercle de sa configuration géométrique de repos à sa configuration géométrique déformée et vice versa. Le passage d'une configuration géométrique à l'autre est donc commandée par le moyen de commande 5 du déplacement du couvercle 3.

Avantageusement, le moyen de commande 5 du déplacement du couvercle 3 est incorporé dans le sous-ensemble 10. Selon l'exemple de réalisation illustré aux figures, l'appareil 1 comprend un étrier 6 formant pièce d'accostage avec la cuve 2, ledit étrier 6 étant destiné à venir en appui sur le bord rentrant 2C, contre la face externe de ce dernier. L'étrier 6 est ainsi conçu pour être disposé en travers de l'ouverture de la cuve 2, de manière à venir en appui externe sur le bord rentrant 2C, en deux régions diamétralement opposées, tel que cela est illustré aux figures 1 à 3 notamment. L'étrier 6 est avantageusement formé d'une plaque métallique allongée s'étendant longitudinalement entre deux extrémités opposées pourvues chacune d'un bord tombant respectif 6A, 6B permettant d'assurer un positionnement correct, centré, de l'étrier 6 sur la cuve 2. Au sens de l'invention, on considère que le couvercle 3 est rapporté dans la cuve 2 lorsque l'étrier 6 (ou tout autre moyen équivalent) repose sur et au-dessus de la cuve 2, en prenant appui sur le bord supérieur (formé ici par le bord rentrant 2C) de la cuve 2 tel qu'illustré par exemple à la figure 1.

Le moyen de commande 5 du déplacement du couvercle 3 comprend de façon avantageuse un levier 7 mobile conçu pour être actionné manuellement par l'utilisateur.

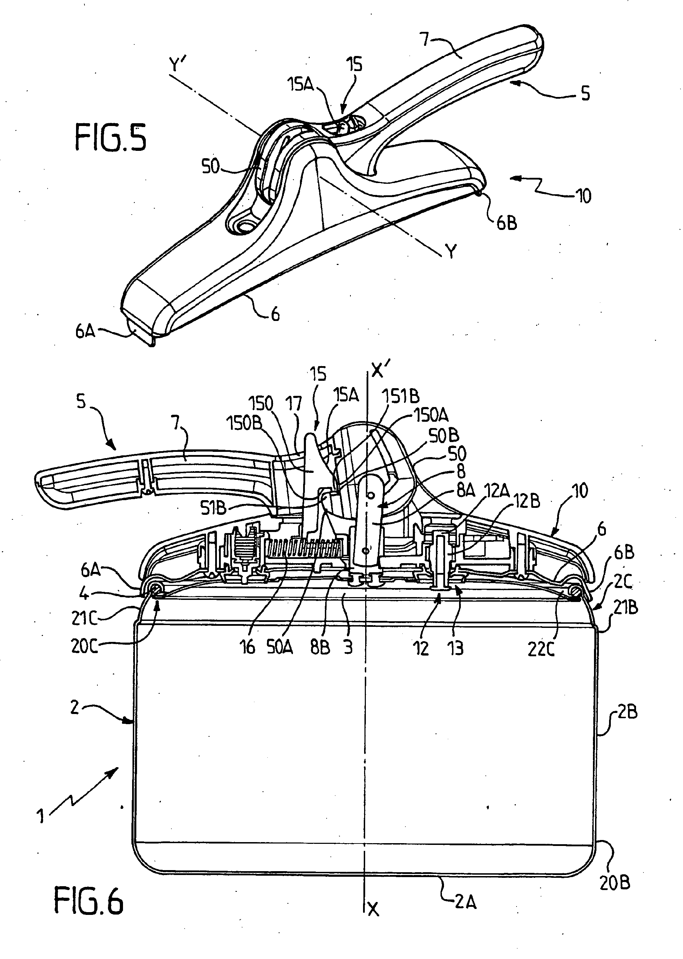

Le levier 7 est avantageusement monté mobile relativement à l'étrier 6 entre au moins d'une part une première position (illustrée aux figures 3 et 5) correspondant à la première position du moyen de commande 5 (fermeture), et d'autre part une deuxième position (illustrée aux figures 1, 2 et 4) correspondant à la deuxième position du moyen de commande 5 (ouverture). De préférence, le levier 7 est monté à pivotement relativement à l'étrier 6 selon un axe de rotation Y-Y' perpendiculaire à l'axe X-X'. Le levier 7 est également de préférence relié, par l'intermédiaire d'un système de transmission d'effort 8, au couvercle 3 et préférentiellement au centre dudit couvercle 3 pour que le pivotement du levier 7 de sa deuxième vers sa première position entraîne l'exercice d'un effort de traction vers le haut sur le centre du couvercle 3 et réciproquement.

Dans l'exemple illustré aux figures, le système de transmission d'effort 8 comprend au moins une biellette 8A dont la première extrémité est reliée à pivotement au levier 7, selon un axe de rotation parallèle à l'axe Y-Y' mais décalé par rapport à ce dernier et dont la deuxième extrémité est reliée à pivotement à une pièce d'attache 8B en forme de U solidarisée au couvercle 3, par exemple par rivetage.

L'invention n'est cependant pas limitée à un moyen de commande 5 comprenant un levier 7 rotatif actionnant un système de biellettes 8A. Il est par exemple tout à fait envisageable que le moyen de commande 5 comprenne non pas un levier mais un volant relié à une roue dentée actionnant un système de transmission d'effort à crémaillère.

Il est bien évidemment également envisageable, sans pour autant que l'on sorte du cadre de l'invention, que le moyen de commande 5 assure non pas une double fonction comme dans l'exemple illustré aux figures, mais seulement la fonction de déplacement (globale) du couvercle 3, par exemple selon un mode de réalisation correspondant à un autocuiseur à trou d'homme dans lequel le couvercle ovale vient simplement se plaquer de manière étanche contre le bord rentrant sans être ensuite déformé.

Il est également envisageable, dans le cas cette fois d'un mode de réalisation à couvercle déformable, que le moyen de commande 5 sollicite le couvercle 3 selon un autre mode de déformation que la flexion.

Conformément à l'invention, l'appareil de cuisson sous pression 1 comprend un verrou 15 activable/désactivable conçu pour, lorsqu'il est activé, empêcher le moyen de commande 5 du déplacement du couvercle 3 de rejoindre sa deuxième position (correspondant à l'ouverture du couvercle 3) à partir de sa première position (correspondant à la fermeture du couvercle 3), ledit verrou 15 étant activable indépendamment du niveau de pression régnant à l'intérieur de l'enceinte. En d'autres termes, le verrou 15 est conçu pour assurer sa fonction de blocage mécanique du moyen de commande 5 quel que soit le niveau de pression régnant dans l'enceinte de cuisson hermétique formée par la cuve 2 et le couvercle 3, c'est-à-dire que le moyen de commande 5 peut être stoppé dans sa première position par le verrou 15 même si la pression régnant au sein de la cuve 2 est sensiblement égale (voire inférieure) à la pression atmosphérique. Grâce à cette caractéristique, l'utilisateur peut sans risque utiliser le moyen de commande 5 comme une poignée de préhension manuelle, dans la mesure où le verrou 15, une fois activé, empêche tout déplacement dudit moyen de commande 5 vers sa deuxième position, et donc toute ouverture intempestive du couvercle 3. Le verrou 15 procure donc un effet de blocage positif du moyen de commande 5.

Avantageusement, le verrou 15 coopère avec le moyen de commande 5 pour être automatiquement activé lorsque ledit moyen de commande 5 atteint sa première position. Selon cette caractéristique technique, le verrou 15 est auto-activable, c'est-à-dire que la liaison fonctionnelle entre ledit verrou 15 et le moyen de commande 5 est telle que l'atteinte, par le moyen de commande 5, de sa première position provoque simultanément l'activation du verrou 15, qui empêche alors tout retour du moyen de commande 5 vers sa deuxième position. Grâce à cette caractéristique, l'utilisation de l'appareil 1 est particulièrement simple et sûre puisque l'utilisateur n'a pas à se préoccuper de l'activation du verrou 15, cette dernière étant réalisée automatiquement lors de la fermeture du couvercle 3, indépendamment du niveau de pression régnant dans l'enceinte. Afin de réaliser cette fonction d'auto-activation, le moyen de commande 5 du déplacement du couvercle 3 est avantageusement pourvu d'une came 50, tandis que le verrou 15 est lui-même pourvu d'un cliquet 150 présentant une configuration de rappel élastique correspondant à l'état activé du verrou 15, lesdits came 50 et cliquet 150 coopérant mécaniquement pour s'interverrouiller lorsque le moyen le commande 5 atteint sa première position, de manière à empêcher le retour du moyen de commande 5 dans sa deuxième position.

Selon le mode de réalisation particulier illustré aux figures, la came 50 vient de matière avec le levier 7 et est de ce fait montée en rotation autour de l'axe Y-Y' de rotation du levier 7. Ladite came 50 est destinée à coopérer en appui glissant avec une face de glissement 150A dont est pourvu le cliquet 150, à l'encontre de la force de rappel élastique qui s'exerce sur le cliquet 150. Plus précisément, la came 50 comporte une surface inclinée 50A destinée à glisser contre la face de glissement 150A du verrou 15 lors du déplacement du moyen de commande 5. La face 150A se prolonge à sa partie inférieure par un ressaut 150B en rupture de pente formant une butée.

La came 50 est elle-même également pourvue d'un ressaut complémentaire 50B formant butée, qui vient en regard du ressaut 150B par retour élastique du cliquet 150, pour réaliser ainsi un interverrouillage entre le verrou 15 et le levier 7, par mise en appui réciproque du ressaut 150B contre le ressaut 50B. Grâce à ces caractéristiques techniques, lorsque le levier 7 est amené de sa deuxième position à sa première position, il repousse élastiquement le verrou 15 par coopération des faces conjuguées 50A, 150A jusqu'à ce que la rupture de pente correspondant aux ressauts 50B, 150B permette un retour élastique du verrou 15 et un interverrouillage verrou 15 / levier 7 par mise en vis-à-vis desdits ressauts 50B, 150B. Dès lors, toute ouverture intempestive de l'appareil est impossible, même si l'utilisateur saisit par le levier 7 l'appareil 1 fermé. En d'autres termes, le mode de réalisation illustré aux figures est basé sur la mise en oeuvre, en tant que verrou 15, d'une pièce affectant la forme d'un crochet. Ce crochet est en permanence rappelé dans une configuration de verrouillage correspondant à l'état activé du verrou et peut être écarté temporairement de cette configuration par action de la came 50 solidaire du levier 7 pour revenir ensuite, par retour élastique, s'interverrouiller avec le ressaut 50B de la came 50. Le retour élastique du crochet dans sa position de rappel et de butée produit en outre un bruit sec de fermeture indiquant à l'utilisateur que son appareil 1 est correctement verrouillé, ce qui est de nature à le rassurer, si besoin était.

Dans le mode de réalisation préférentiel illustré aux figures, le verrou 15 est monté mobile relativement au couvercle 3 et est soumis en permanence à l'action d'une ressort 16 rappelant le verrou 15 dans une première position (illustrée notamment à la figure 3) correspondant à l'état activé du verrou 15. Il est cependant tout à fait envisageable, sans pour autant que l'on sorte du cadre de l'invention, que le verrou 15 ne soit pas monté mobile relativement au couvercle, mais présente simplement un caractère élastiquement déformable lui permettant de coopérer avec la came 50.

Avantageusement, le verrou 15 est doté d'un organe de commande manuel 15A permettant à un utilisateur de désactiver, par une action positive de sa part, le verrou 15, de manière à autoriser le levier 7 à retourner dans sa deuxième position à partir de sa première position. L'organe de commande manuel 15A est préférentiellement directement constitué par une portion du verrou 15 lui-même, et par exemple par une face inclinée directement conformé sur le cliquet 150. Avantageusement, une lumière 17 est ménagée à travers le levier 7 pour permettre à l'utilisateur un accès manuel direct à cette face inclinée formant organe de commande 15A, même lorsque le levier 7 est rabattu dans sa première position (de fermeture). L'utilisateur peut alors, en exerçant une pression horizontale sur le cliquet 150, à l'encontre de la force de rappel exercée par le ressort 16, libérer le ressaut 50B de l'emprise du cliquet 150 et permettre le déplacement libre du levier 7.

De façon particulièrement avantageuse, l'organe de commande manuel 15A est lui-même activable/désactivable, ledit organe de commande manuel 15A permettant à l'utilisateur, lorsqu'il est activé, de désactiver le verrou 15. A contrario, lorsque l'organe de commande manuel 15A est désactivé, il est impossible à l'utilisateur de supprimer l'interverrouillage entre le verrou 15 et le levier 7.

De préférence, le moyen de commande 5 du déplacement du couvercle 3 est monté mobile entre sa première position (illustrée aux figures 3 et 5) et une troisième position (illustrée à la figure 6), le sens du déplacement du moyen de commande 5 de sa première position vers sa troisième position étant identique au sens de déplacement dudit moyen de commande 5 de sa deuxième position (illustrée par exemple à la figure 1) vers sa première position (illustrée aux figures 3 et 5). En d'autres termes, la première position du moyen de commande 5 constitue une position intermédiaire entre la deuxième et la troisième position sur la course du moyen de commande 5. Cela signifie également que lors du passage de sa troisième vers sa deuxième position (et vice versa) le moyen de commande 5 passe nécessairement par sa première position. De préférence, la première position est une position de rappel, de sorte que le moyen de commande 5, lorsqu'il se trouve dans sa troisième position, a une tendance naturelle à revenir en butée dans sa première position. Cet effet de rappel est avantageusement obtenu grâce au fait que la biellette 8A est orientée de façon légèrement oblique par rapport à l'axe vertical X-X', lequel passe par le centre de rotation du levier 7, lorsque le moyen de commande 5 (et donc le levier 7) se trouve dans sa troisième position. Ce décalage angulaire combiné avec la force de réaction élastique exercée par le couvercle 3 est de nature à rappeler en permanence le moyen de commande 5 dans sa première position.

Avantageusement, le moyen de commande 5 coopère avec l'organe de commande manuel 15A du verrou 15 pour que ledit organe 15A d'une part soit désactivé lorsque le moyen de commande 5 se trouve dans sa première position, et d'autre part soit activé lorsque le moyen de commande 5 se trouve dans sa troisième position. En d'autres termes, lorsque l'organe de commande 5 se trouve dans sa première position, il est impossible à l'utilisateur de désactiver le verrou 15, dans la mesure où l'organe de commande manuel 15A est lui-même désactivé. En revanche, lorsque le moyen de commande 5 se trouve dans sa troisième position, alors l'organe de commande manuel 15A est activé ce qui autorise l'utilisateur à désactiver le verrou 15 pour libérer le mouvement du levier 7. De préférence, le mouvement du levier 7 reste libre entre la troisième position et la première position.

Ces dispositions techniques permettent d'obtenir une fonction de sécurité supplémentaire particulièrement intéressante. En effet, si l'utilisateur saisit l'appareil 1 par le moyen de commande 5 (en l'occurrence par le levier 7), ce dernier va avoir une tendance naturelle, sous l'effet du poids de l'appareil 1, à se déplacer en direction de sa deuxième position (correspondant à l'ouverture du couvercle 3). Ce déplacement vers la deuxième position, qui est libre entre la troisième et la première position, est en revanche empêché par le verrou 15 à partir du moment où le moyen de commande 5 atteint sa première position. En d'autres termes, lorsque l'utilisateur saisit et soulève l'autocuiseur 1 par le levier 7, ce dernier vient nécessairement en butée dans sa première position (illustrée à la figure 3).

Or, toute désactivation du verrou 15 est impossible dans cette première position. Par conséquent, si l'utilisateur veut déverrouiller son appareil de cuisson 1, il doit tout d'abord le poser sur un support stable de façon à pouvoir amener manuellement le moyen de commande 5 de sa première à sa troisième position (illustrée à la figure 6), troisième position dans laquelle la désactivation du verrou 15 est possible.

Tel que cela est en particulier visible aux figures 3, 6 et 7, il est envisageable, afin de réaliser la fonction d'activation/désactivation de l'organe de commande manuel 15A, de pourvoir chacun des ressauts 50B, 150B d'une dent correspondante 51B, 151B, lesdites dents 51B, 151B coopérant en accrochage entre elles pour empêcher le déplacement du verrou 15 lorsque le levier 7 se trouve dans sa première position (illustrée à la figure 3). En revanche, lorsque le levier 7 est pivoté, à partir de sa première position, jusque dans une troisième position (de préférence très proche de la première position) correspondant à la troisième position du moyen de commande 5 (illustré à la figure 6), les dents 51B, 151B sont désengagées, ce qui permet alors à l'utilisateur d'actionner le verrou 15 (par appui sur la face 15A) pour libérer la course du levier 7.

Avantageusement, l'appareil 1 conforme à l'invention comprend un doigt de sécurité 12 sensible à la pression régnant à l'intérieur de l'enceinte, ledit doigt étant distinct du verrou 15. Le doigt de sécurité 12 est monté mobile relativement au couvercle 3 entre d'une part une première position dans laquelle il se trouve lorsque le niveau de pression dans l'enceinte est inférieur à un niveau prédéterminé de sécurité compatible avec la sécurité de l'utilisateur, et d'autre part une deuxième position qu'il atteint lorsque le niveau de pression dans l'enceinte atteint ou dépasse ledit niveau prédéterminé.

En d'autres termes, le doigt de sécurité 12 est conçu pour se déplacer sous l'effet de l'action motrice exercée par la pression régnant dans l'enceinte formée par la réunion étanche de la cuve 2 et du couvercle 3.

Avantageusement, le verrou 15 coopère avec le doigt de sécurité 12 pour que ledit doigt de sécurité 12, lorsqu'il se trouve dans sa deuxième position (correspondant à un niveau de pression dans la cuve supérieure ou égale au niveau prédéterminé de sécurité), bloque le verrou 15 dans son état activé, et ce indépendamment de l'état (activé ou non) de l'organe de commande manuel 15A. Grâce à cette mesure technique, toute désactivation du verrou 15 lorsque la pression régnant dans l'enceinte de cuisson est supérieure au niveau prédéterminé de sécurité est impossible, ce qui interdit par-là même le passage du levier 7 de sa première position (correspondant à la fermeture du couvercle 3) à sa deuxième position (correspondant à l'ouverture du couvercle). En d'autres termes, le doigt 12 forme un moyen de sécurité à l'ouverture qui permet d'éviter que l'utilisateur ne puisse ouvrir l'appareil de cuisson 1 alors que la pression régnant à l'intérieur de ce dernier est suffisamment importante pour entraîner des phénomènes dangereux, tel que l'échappement brutal du couvercle ou l'éjection de matières alimentaires brûlantes.

De façon préférentielle et connue en tant que telle, le doigt de sécurité 12 coopère avec un orifice 13 ménagé à travers le couvercle 3 pour que ledit orifice 13 soit obturé lorsque le doigt 12 se trouve dans sa deuxième position et dégagé lorsque le doigt 12 se trouve dans sa première position. De cette façon, l'enceinte de cuisson peut monter en pression dès que le doigt 12 atteint sa deuxième position alors qu'au contraire elle ne peut monter en pression lorsque le doigt 12 se trouve dans sa première position puisque dans ce cas l'orifice 13 met en communication de l'intérieur de l'enceinte avec l'extérieur de façon suffisante pour interdire toute montée en pression au-delà du niveau prédéterminé de sécurité.

Avantageusement, le verrou 15 coopère avec le doigt de sécurité 12 pour que le verrou 15, lorsqu'il est désactivé, empêche le doigt de sécurité 12 de rejoindre sa deuxième position à partir de sa première position. De cette façon le doigt de sécurité 12 assure donc, outre sa fonction de sécurité à l'ouverture, une fonction de sécurité à la mauvaise fermeture.

En effet, comme cela a été exposé dans ce qui précède, l'enceinte de cuisson est incapable de monter en pression au-delà du niveau de sécurité tant que le doigt de sécurité 12 n'a pas rejoint sa deuxième position, deuxième position qu'il est empêché de rejoindre tant que le verrou 15 n'est pas activé pour empêcher toute ouverture intempestive du couvercle 3.

Afin d'éviter que le verrou 15 ne puisse se trouver dans son état activé alors que le moyen de commande 5 se trouve en dehors de sa première ou de sa troisième position correspondant à la fermeture du couvercle 3, ledit verrou 15 coopère avec le moyen de commande 5 du déplacement du couvercle 3 pour que tant que le moyen de commande 5 n'a pas atteint sa première position (illustrée à la figure 3) à partir de sa deuxième position (illustrée à la figure 1), le verrou 15 soit maintenu dans son état désactivé. Une telle fonction technique est par exemple obtenue par une conformation adaptée de la came 50, conçue pour maintenir en permanence le cliquet 150 (lequel appuie lui-même en permanence contre la came 50 sous l'effet de la force exercée par le ressort 16) en dehors de sa position de rappel élastique, c'est-à-dire en dehors de sa position d'activation, tant que le levier 7 n'est pas dans sa première position.

En définitive, dans la variante préférentielle de réalisation illustrée aux figures, le doigt de sécurité 12 coopère de manière indirecte avec le levier 7, par l'intermédiaire du verrou 15. Cette coopération indirecte permet de garantir le verrouillage de l'appareil 1 même en l'absence de pression à l'intérieur de ce dernier.

Cette coopération indirecte permet également une optimisation de la conception du doigt de sécurité 12, conception qui ne dépend plus de l'interaction directe du doigt 12 avec le levier 7 comme dans l'art antérieur.

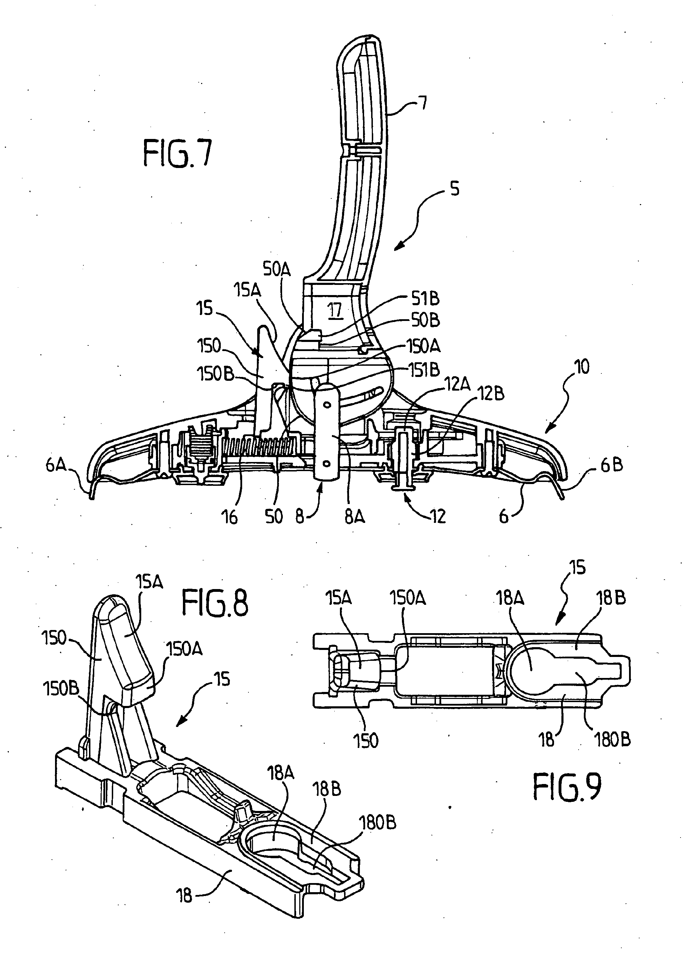

De façon préférentielle, tel que cela est illustré aux figures, le verrou 15 comprend une pièce de sécurité 18 (visible plus particulièrement sur les figures 8 et 9).

Ladite pièce 18 comportant une lumière 18A et un écran 18B, ladite pièce 18 étant disposée sur la trajectoire de déplacement du doigt de sécurité 12 pour que lorsque le verrou 15 se trouve dans sa position de rappel élastique, la lumière 18A se trouve à l'aplomb du doigt de sécurité 12 et autorise le déplacement libre de ce dernier en son sein, et lorsque le verrou 15 se trouve en dehors de sa position de rappel, l'écran 18B se trouve à l'aplomb du doigt 12 pour faire obstacle au déplacement du doigt 12 de sa première vers sa deuxième position.

Plus précisément, le verrou 15 est formé dans ce cas d'un élément unitaire monobloc, réalisé par exemple par moulage de matière plastique, constitué d'une part d'un crochet formant à la fois cliquet 150 et organe de commande manuel 15A et d'autre part de la pièce 18. Cet élément unitaire indépendant est monté en translation horizontale (perpendiculairement à l'axe X-X') relativement à l'étrier 6, et soumis en permanence à l'effort d'un rappel du ressort 16 qui presse cet élément unitaire dans une position de butée correspondant à l'état activé du verrou 15. Dans cet état activé, la lumière 18A se trouve au droit de l'orifice 13, ladite lumière 18A présentant de plus un diamètre suffisant pour permettre au doigt de sécurité 12 de se déplacer librement en son sein jusqu'à atteindre sa deuxième position, dans laquelle il obture de façon étanche l'orifice 13. Dans cette deuxième position, le diamètre de la lumière étant ajusté à celui du doigt 12, tout mouvement translatif du verrou 15 est impossible.

Cela garantit que le couvercle 3 ne peut être déverrouillé accidentellement alors qu'un niveau de pression dangereux subsiste dans l'enceinte.

En revanche, lorsque le verrou 15 se trouve en dehors de sa position de rappel et de butée, la lumière 18A ne coïncide plus avec l'orifice 13, de sorte que le doigt de sécurité 12 est empêché de progresser vers le haut pour atteindre sa deuxième position. Le doigt de sécurité 12 n'est donc pas en mesure d'obturer l'orifice 13, ce qui interdit toute montée en pression de l'appareil 1. L'écran 18B peut être constitué par un panneau plein de matière. Il est cependant envisageable, tel que cela est illustré aux figures, de prévoir un écran 18B pourvu d'une échancrure 180B destinée à accueillir le sommet 12A du doigt de sécurité 12 à des fins de guidage et /ou de visualisation par l'utilisateur, étant entendu que ledit doigt de sécurité 12 présente un tronçon 12B de section plus importante, qui ne peut être accueilli dans l'échancrure 180B et qui vient donc en butée contre la pièce 18 entourant l'échancrure 180B. Cette conception permet de dimensionner le doigt de sécurité 12 de façon particulièrement optimale, dans la mesure où ce dernier n'est plus soumis, comme dans l'art antérieur, à un effort direct d'arrachement exercé par le levier pivotant 7, mais doit seulement s'opposer au déplacement en translation de la pièce 18, laquelle n'est soumise dans le plan horizontal qu'à la force de rappel exercée par le ressort 16.

Avantageusement, la deuxième position du moyen de commande 5 du déplacement du couvercle 3 est une position de rappel. Cette caractéristique technique, qui n'est pas mise en oeuvre dans le mode de réalisation illustré aux figures mais qui fait bien entendu partie du cadre de l'invention, permet de garantir que l'autocuiseur 1 ne montera pas en pression si le verrou 15 ne bloque pas le levier 7 (puisque dans ce cas, le levier 7 retournera naturellement dans sa position d'ouverture qui interdit la montée en pression de l'appareil).

Cet effet de rappel du moyen de commande 5 dans sa deuxième position peut être obtenu, dans le cas d'un autocuiseur à couvercle déformable, par l'effet « *ressort* » du couvercle lui-même, combiné avec un agencement approprié du système de transmission d'effort 8.

Il est également envisageable, selon un autre mode de réalisation non illustré aux figures, que la première (ou la troisième) position du moyen de commande 5 du déplacement du couvercle 3 soit également une position de rappel. Une telle mesure technique, qui peut là encore être obtenue à l'aide d'un agencement approprié du système de transmission d'effort 8, permet de faciliter la fermeture, ainsi que la manipulation du verrou 15 pour l'ouverture.

Le fonctionnement de l'appareil de cuisson 1 illustré aux figures est le suivant.

La cuve 2 est posée sur une source de chauffe, constituée par exemple par une plaque de cuisson. Des aliments sont disposés au sein de la cuve 2, éventuellement dans un panier de cuisson inséré lui-même dans la cuve 2. L'utilisateur saisit ensuite le couvercle 3, en attrapant manuellement le levier 7 qui fait en l'occurrence office de poignée de préhension. Il insère le couvercle 3 à l'intérieur de la cuve 2, sous le bord rentrant 2C. L'étrier 6 se trouve quant à lui à l'extérieur de la cuve 2 et repose sur la face externe du bord rentrant 2C.

L'appareil de cuisson 1 se trouve à cet instant dans la configuration illustrée aux figures 1 et 2. L'utilisateur déplace ensuite le levier 7 en rotation selon une course angulaire en sens anti-horaire (défini par rapport aux figures 2, 3 et 6) correspondant environ à un demi-cercle, et par exemple de l'ordre de 165°, de sa deuxième position (d'ouverture) à sa première position (de fermeture).

Cela a pour effet de transmettre, par l'intermédiaire de la biellette 8A, un effort de traction vers le haut sur le centre du couvercle 3, l'étrier 6 restant en permanence appuyé sur le bord de la cuve 2. Cet effort de traction a pour effet dans un premier temps de déplacer le couvercle 3 vers le haut, puis de le déformer par flexion une fois que le couvercle 3 est venu en appui contre le joint 4 équipant le bord rentrant 2C. Simultanément, la came 50 repousse le cliquet 150 en dehors de sa position de rappel élastique pour permettre enfin, lorsque le levier 7 atteint sa première position, un retour du cliquet dans sa position de rappel. La came 50 et le cliquet 150 sont alors interverrouillés, et l'appareil de cuisson sous pression 1 se trouve dans la configuration illustrée à la figure 3. Dans cette configuration, le doigt de sécurité 12 est libre de se déplacer à travers la lumière 18A, et peut ainsi atteindre sa deuxième position dans laquelle il ferme hermétiquement l'orifice 13 et bloque le verrou 15 en position. A la fin du cycle de cuisson, une fois l'intérieur de l'enceinte ramené à pression atmosphérique par tout moyen connu, l'utilisateur déverrouille par une action positive de sa part l'appareil 1 en exerçant une légère pression vers le bas sur le levier 7, de manière à amener ce dernier dans sa troisième position, qui est préférentiellement une position de butée. Cela a pour effet de provoquer le désengagement mutuel des dents 51B, 151B, de sorte que l'utilisateur peut désactiver le verrou 15 par pression horizontale directe sur ce dernier, via la surface 15A. Cela libère le levier 7 de l'emprise du verrou 15 et permet à l'utilisateur de déplacer le levier 7 selon une course angulaire horaire (défini par rapport aux figures 2, 3 et 6) pour le ramener de sa première position (de fermeture) à sa deuxième position (d'ouverture), cette dernière étant de préférence une position de butée. La course horaire du levier 7 a pour effet de déplacer le couvercle 3 vers le bas, tout en provoquant une relaxation de l'effort de flexion. Le couvercle 3 retrouve alors sa forme initiale en l'absence de sollicitation mécanique, forme initiale dont le caractère cintré (visible notamment sur la figure 4) lui permet d'être aisément extrait hors de la cuve 2.

## Revendications

1. Appareil de cuisson sous pression (1) à couvercle rentrant comprenant au moins:
- une cuve (2) et un couvercle (3) conçu pour être rapporté dans la cuve (2) avec une faculté de mobilité entre au moins d'une part une position de fermeture dans laquelle il forme avec la cuve (2) une enceinte de cuisson sensiblement étanche, et d'autre part une position d'ouverture dans laquelle il permet la communication de l'intérieur de l'enceinte avec l'extérieur,
- un moyen de commande (5) du déplacement du couvercle (3) entre ses positions de fermeture et d'ouverture, ledit moyen de commande (5) étant monté mobile entre au moins une première position correspondant à la position de fermeture du couvercle (3) et une deuxième position correspondant à la position d'ouverture du couvercle (3),
ledit appareil (1) étant **caractérisé en ce qu'**il comprend un verrou (15) activable / désactivable conçu pour, lorsqu'il est activé, empêcher le moyen de commande (5) de rejoindre sa deuxième position à partir de sa première position, ledit verrou (15) étant activable indépendamment du niveau de pression régnant à l'intérieur de l'enceinte.

2. Appareil (1) selon la revendication 1 **caractérisé en ce que** le verrou (15) coopère avec le moyen de commande (5) pour être automatiquement activé lorsque le moyen de commande (5) atteint sa première position.

3. Appareil (1) selon la revendication 2 **caractérisé en ce que** le moyen de commande (5) du déplacement du couvercle (3) est pourvu d'une came (50), tandis que le verrou (15) est pourvu d'un cliquet (150) présentant une configuration de rappel élastique correspondant à l'état activé du verrou (15), lesdits came (50) et cliquet (150) coopérant mécaniquement pour s'interverrouiller lorsque le moyen de commande (5) atteint sa première position, de manière à empêcher le retour du moyen de commande (5) dans sa deuxième position.

4. Appareil (1) selon l'une des revendications 1 à 3 **caractérisé en ce que** le verrou (15) est doté d'un organe de commande manuel (15A) permettant à un utilisateur de désactiver le verrou (15).

5. Appareil (1) selon la revendication 4 **caractérisé en ce que** l'organe de commande manuel (15A) est activable / désactivable, ledit organe de commande manuel (15A) permettant, lorsqu'il est activé, à un utilisateur de désactiver le verrou (15).

6. Appareil (1) selon la revendication 5 **caractérisé en ce que** le moyen de commande (5) du déplacement du couvercle (3) est monté mobile entre sa première position et une troisième position, le sens de déplacement dudit moyen de commande (5) de sa première position vers sa troisième position étant identique à son sens de déplacement de sa deuxième position vers sa première position, le moyen de commande (5) coopérant avec l'organe de commande manuel (15A) pour que ce dernier soit d'une part désactivé lorsque le moyen de commande (5) se trouve dans sa première position, et d'autre part soit activé lorsque le moyen de commande (5) se trouve dans sa troisième position.

7. Appareil (1) selon l'une des revendications 1 à 6 **caractérisé en ce qu'**il comprend un doigt de sécurité (12) sensible à la pression régnant à l'intérieur de l'enceinte, ledit doigt de sécurité (12) étant monté mobile relativement au couvercle (3) entre d'une part une première position dans laquelle il se trouve lorsque le niveau de pression dans l'enceinte est inférieur à un niveau prédéterminé, et d'autre part une deuxième position qu'il atteint lorsque le niveau de pression dans l'enceinte atteint ou dépasse le niveau prédéterminé.

8. Appareil (1) selon la revendication 7 **caractérisé en ce que** le doigt de sécurité (12) coopère avec un orifice (13) ménagé à travers le couvercle (3) pour que ledit orifice (13) soit obturé lorsque le doigt (12) se trouve dans sa deuxième position et dégagé lorsque le doigt (12) se trouve dans sa première position.

9. Appareil (1) selon la revendication 7 ou 8 **caractérisé en ce que** le verrou (15) coopère avec le doigt de sécurité (12) pour que le doigt de sécurité (12), lorsqu'il se trouve dans sa deuxième position, bloque le verrou (15) dans son état activé.

10. Appareil (1) selon l'une des revendications 7 à 9 **caractérisé en ce que** le verrou (15) coopère avec le doigt de sécurité (12) pour que le verrou (15), lorsqu'il est désactivé, empêche le doigt de sécurité (12) de rejoindre sa deuxième position à partir de sa première position.

11. Appareil (1) selon les revendications 9 et 10 **caractérisé en ce que** le verrou (15) est monté mobile relativement au couvercle (3) et est soumis en permanence à l'action d'un ressort (16) rappelant le verrou (15) dans une première position correspond à l'état activé du verrou (15), ledit verrou (15) comprenant une pièce de sécurité (18) comportant une lumière (18A) et un écran (18B), ladite pièce (18) étant disposée sur la trajectoire de déplacement du doigt de sécurité (12) de façon que lorsque le verrou (15) se trouve dans sa position de rappel, la lumière (18A) se trouve à l'aplomb du doigt de sécurité (12) pour autoriser le déplacement libre de ce dernier en son sein, et lorsque le verrou (15) se trouve en dehors de sa position de rappel, l'écran (18B) se trouve à l'aplomb du doigt (12) pour faire obstacle au déplacement du doigt (12) de sa première vers sa deuxième position.

12. Appareil (1) selon l'une des revendications 1 à 11 **caractérisé en ce que** le moyen de commande (5) coopère avec le verrou (15) pour maintenir ce dernier dans son état désactivé tant que le moyen de commande (5) n'a pas atteint sa première position.

13. Appareil (1) selon l'une des revendications 1 à 12 **caractérisé en ce que** la deuxième position du moyen de commande (5) du déplacement du couvercle (3) est une position de rappel.

14. Appareil (1) selon l'une des revendications 1 à 13 **caractérisé en ce que** la cuve (2) comprend une paroi latérale (2B) à partir de laquelle s'étend de façon centripète un bord rentrant (2C) présentant une face interne (20C), le couvercle (3) étant un couvercle déformable susceptible d'évoluer entre une configuration géométrique de repos permettant l'introduction du couvercle (3) dans la cuve (2) sous la face interne (20C) et une configuration géométrique déformée permettant au couvercle (3) de venir en contact sensiblement étanche contre ladite face interne (20C), le passage d'une configuration à l'autre étant commandé par le moyen de commande (5) du déplacement du couvercle (3).

## Claims

1. A pressure-cooking utensil (1) having an internalmount lid and comprising at least:
- a bowl (2) and a lid (3) designed to be mounted in the bowl (2) to be moveable between at least a closed position in which it co-operates with the bowl (2) to form a substantially leaktight cooking vessel, and an open position in which it makes it possible for the inside of the vessel to communicate with the outside; and
- control means (5) for causing the lid (3) to move between its closed position and its open position, said control means (5) being mounted to move between at least a first position corresponding to the closed position of the lid (3) and a second position corresponding to the open position of the lid (3);
said pressure-cooking utensil (1) being **characterized in that** it further comprises an activatable/deactivatable latch (15) designed so that, when it is activated, it prevents the control means (5) from reaching their second position from their first position, said latch (15) being activatable independently of the level of pressure prevailing inside the vessel.

2. A utensil (1) according to claim 1, **characterized in that** the latch (15) co-operates with the control means (5) so as to be activated automatically when the control means (5) reach their first position.

3. A utensil (1) according to claim 2, **characterized in that** the control means (5) for causing the lid (3) to move are provided with a cam (50), while the latch (15) is provided with a pawl (150) having a resilient return configuration corresponding to the activated state of the latch (15), said cam (50) and said pawl (150) co-operating mechanically so as to interlock when the control means (5) reach their first position, so as to prevent the control means (5) from returning to their second position.

4. A utensil (1) according to any one of claims 1 to 3, **characterized in that** the latch (15) is provided with a manual control member (15A) enabling the user to deactivate the latch (15).

5. A utensil (1) according to claim 4, **characterized in that** the manual control member (15A) is activatable/deactivatable, said manual control member (15A) making it possible, when it is activated, for a user to deactivate the latch (15).

6. A utensil (1) according to claim 5, **characterized in that** the control means (5) for causing the lid (3) to move are mounted to move between their first position and a third position, the direction of movement from their first position to their third position being identical to their direction of movement from their second position to their first position, the control means (5) co-operating with the manual control member (15A) so that said manual control member firstly is deactivated when the control means (5) are in their first position, and secondly is activated when the control means (5) are in their third position.

7. A utensil (1) according to any one of claims 1 to 6, **characterized in that** it further comprises a safety finger (12) that is sensitive to the pressure prevailing inside the vessel, said safety finger (12) being mounted to move relative to the lid (3) between firstly a first position in which it finds itself when the pressure level inside the vessel is lower than a predetermined level, and secondly a second position that it reaches when the pressure level inside the vessel reaches or exceeds the predetermined level.

8. A utensil (1) according to claim 7, **characterized in that** the safety finger (12) co-operates with an orifice (13) provided through the lid (3) so that said orifice (13) is closed off when the finger (12) is in its second position and is unobstructed when the finger (12) is in its first position.

9. A utensil (1) according to claim 7 or claim 8, **characterized in that** the latch (15) co-operates with the safety finger (12) so that, when said safety finger (12) finds itself in its second position, it locks the latch (15) in its activated state.

10. A utensil (1) according to any one of claims 7 to 9, **characterized in that** the latch (15) co-operates with the safety finger (12) so that the latch (15), when it is deactivated, prevents the safety finger (12) from reaching its second position from its first position.

11. A utensil (1) according to claims 9 and 10, **characterized in that** the latch (15) is mounted to move relative to the lid (3) and is subjected continuously to the action of a spring (16) urging the latch (15) into a first position that corresponds to the activated state of the latch (15), said latch (15) being provided with a safety piece (18) provided with a slot (18A) and with a screen (18B), said piece (18) being disposed in the path along which the safety finger (12) moves so that when the latch (15) finds itself in its return position, the slot (18A) finds itself vertically in register with the safety finger (12) so as to allow said safety finger to move freely in it, and, when the latch (15) is out of its return position, the screen (18B) finds itself vertically in register with the finger (12) so as to obstruct movement of the finger (12) from its first position to its second position.

12. A utensil (1) according to any one of claims 1 to 11, **characterized in that** the control means (5) co-operate with the latch (15) to maintain said latch in its deactivated state so long as the control means (5) have not reached their first position.

13. A utensil (1) according to any one of claims 1 to 12, **characterized in that** the second position of the control means (5) for causing the lid (3) to move is a return position.

14. A utensil (1) according to any one of claims 1 to 13, **characterized in that** the bowl (2) has a side wall (2B) from which an inwardly extending rim (2C) extends that has an inside face (20C), the lid (3) being a deformable lid suitable for going between a rest geometrical position enabling the lid (3) to be inserted into the bowl (2) under the inside face (20C) and a deformed geometrical configuration enabling the lid (3) to come into substantially leaktight contact against said inside face (20C), going from one configuration to the other being caused by the control means (5) for causing the lid (3) to move.

## Patentansprüche

1. Vorrichtung zum Kochen unter Druck (1) mit einem einführbaren Deckel, die zumindest Folgendes aufweist:
- einen Behälter (2) und einen Deckel (3), der zum Aufsetzen in dem Behälter (2) mit einer Bewegungsfähigkeit zwischen zumindest einerseits einer Schließposition, in der er mit dem Behälter (2) einen im Wesentlichen dichten Kochraum ausbildet, und andererseits einer Öffnungsposition, in der er eine Verbindung des Inneren des Raums nach außen erlaubt, bestimmt ist,
- ein Steuerungsmittel (5) zum Versetzen des Deckels (3) zwischen seiner Schließposition und seiner Öffnungsposition, wobei das Steuerungsmittel (5) zwischen zumindest einer ersten Position entsprechend der Schließposition des Deckels (3) und einer zweiten Position entsprechend der Öffnungsposition des Deckels (3) bewegbar montiert ist,
wobei die Vorrichtung (1) **dadurch gekennzeichnet ist, dass**
sie eine aktivierbare/deaktivierbare Verriegelung (15) hat, um, wenn sie aktiviert ist, zu verhindern, dass das Steuerungsmittel (5) seine zweite Position von seiner ersten Position kommend wieder einnimmt, wobei die Verriegelung (15) unabhängig von dem Druckniveau, das in dem Inneren des Raums herrscht, aktivierbar ist.

2. Vorrichtung (1) nach Anspruch 1, **dadurch gekennzeichnet, dass** die Verriegelung (15) mit dem Steuerungsmittel (5) zusammenwirkt, so dass sie automatisch aktiviert wird, wenn das Steuerungsmittel (5) seine erste Position einnimmt.

3. Vorrichtung (1) nach Anspruch 2, **dadurch gekennzeichnet, dass** das Steuerungsmittel (5) zum Versetzen des Deckels (3) einen Nocken (50) hat, wohingegen die Verriegelung (15) eine Sperrklinke (150) hat, die eine elastische Rückstellungskonfiguration entsprechend dem aktivierten Zustand der Verriegelung (15) darstellt, wobei der Nocken (50) und die Sperrklinke (150) mechanisch zum Eingreifen, wenn das Steuerungsmittel (5) seine erste Position einnimmt, dergestalt zusammenwirken, dass die Rückkehr des Steuerungsmittels (5) in seine zweite Position verhindert wird.

4. Vorrichtung (1) nach einem der Ansprüche 1 bis 3, **dadurch gekennzeichnet, dass** die Verriegelung (15) mit einem manuellen Steuerelement (15A) ausgestattet ist, das einem Anwender eine Deaktivierung der Verriegelung (15) erlaubt.

5. Vorrichtung (1) nach Anspruch 4, **dadurch gekennzeichnet, dass** das manuelle Steuerelement (15A) aktivierbar/deaktiverbar ist, wobei das manuelle Steuerelement (15A), wenn es aktiviert ist, einem Anwender die Deaktivierung der Verriegelung (15) erlaubt.

6. Vorrichtung (1) nach Anspruch 5, **dadurch gekennzeichnet, dass** das Steuerungsmittel (5) zum Versetzen des Deckels (3) zwischen seiner ersten Position und einer dritten Position beweglich montiert ist, wobei die Richtung der Versetzung des Steuerungsmittels (5) von seiner ersten Position zu seiner dritten Position identisch mit einer Richtung der Versetzung von der zweiten Position zu der ersten Position ist, wobei das Steuerungsmittel (5) mit dem manuellen Steuerungselement (15A) zusammenwirkt, so dass Letzteres einerseits deaktiviert wird, wenn sich das Steuerungsmittel (5) in seiner ersten Position befindet, und andererseits aktiviert wird, wenn sich das Steuerungsmittel (5) in seiner dritten Position befindet.

7. Vorrichtung (1) nach einem der Ansprüche 1 bis 6, **dadurch gekennzeichnet, dass** sie einen Sicherungsfinger (12) aufweist, der auf den im Inneren des Raums vorherrschenden Druck reagiert, wobei der Sicherungsfinger (12) relativ zu dem Deckel (3) zwischen einerseits einer ersten Position, in der er sich befindet, wenn sich das Druckniveau in dem Raum unterhalb eines vorbestimmten Niveaus befindet, und andererseits einer zweiten Position beweglich montiert ist, die er einnimmt, wenn das Druckniveau in dem Raum das vorgegebene Niveau erreicht oder überschreitet.

8. Vorrichtung (1) nach Anspruch 7, **dadurch gekennzeichnet, dass** der Sicherungsfinger (12) mit einer Öffnung (13) zusammenwirkt, die sich quer über den Deckel (3) erstreckt, damit die Öffnung (13) verschlossen ist, wenn sich der Finger (12) in seiner zweiten Position befindet, und freiliegend ist, wenn sich der Finger (12) in seiner ersten Position befindet.

9. Vorrichtung (1) nach Anspruch 7 oder 8, **dadurch gekennzeichnet, dass** die Verriegelung (15) mit dem Sicherungsfinger (12) zusammenwirkt, damit der Sicherungsfinger (12), wenn er sich in seiner zweiten Position befindet, die Verriegelung (15) in ihrem aktivierten Zustand blockiert.

10. Vorrichtung (1) nach einem der Ansprüche 7 bis 9, **dadurch gekennzeichnet, dass** die Verriegelung (15) mit dem Sicherungsfinger (12) zusammenwirkt, damit die Verriegelung (15), wenn sie deaktiviert ist, den Sicherungsfinger (12) daran hindert, von seiner ersten Position kommend zu seiner zweiten Position zurückzukehren.

11. Vorrichtung (1) nach Anspruch 9 und 10, **dadurch gekennzeichnet, dass** die Verriegelung (15) in Bezug auf den Deckel (3) beweglich montiert ist und unter einer ständigen Wirkung einer Feder (16) steht, die die Verriegelung (15) in eine erste Position entsprechend einem aktivierten Zustand der Verriegelung (15) zurückbringt, wobei die Verriegelung (15) ein Sicherungsstück (18) hat, das eine Öffnung (18A) und einen Rahmen (18B) hat, wobei das Stück (18) über der Versetzungsspur des Sicherungsfingers (12) derart angeordnet ist, dass, wenn sich die Verriegelung (15) in ihrer Rückstellungsposition befindet, die Öffnung (18A) sich senkrecht zu dem Sicherungsfinger (12) befindet, um die freie Versetzung des Letzteren in ihr Inneres zu ermöglichen, und wenn die Verriegelung (15) sich außerhalb der Rückstellungsposition befindet, sich der Rahmen (18B) senkrecht zu dem Finger (12) befindet, um die Versetzung des Fingers (12) von seiner ersten zu seiner zweiten Position zu verhindern.

12. Vorrichtung (1) nach einem der Ansprüche 1 bis 11, **dadurch gekennzeichnet, dass** das Steuerungsmittel (5) mit der Verriegelung (15) zusammenwirkt, um Letzteres in ihrem deaktivierten Zustand zu halten, während das Steuerungsmittel (5) seine erste Position nicht eingenommen hat.

13. Vorrichtung (1) nach einem der Ansprüche 1 bis 12, **dadurch gekennzeichnet, dass** die zweite Position des Steuerungsmittels (5) der Versetzung des Deckels (3) eine Rückstellungsposition ist.

14. Vorrichtung (1) nach einem der Ansprüche 1 bis 13, **dadurch gekennzeichnet, dass** der Behälter (2) eine seitliche Wand (2B) hat, von der sich eine einwärts erstreckende Kante (2C) auf eine zentrierte Weise erstreckt, die eine Innenfläche (20C) aufweist, wobei der Deckel (3) ein verformbarer Deckel ist, der zwischen einer geometrischen Ruheposition, die eine Einführung des Deckels (3) in den Behälter (2) unter die Innenfläche (20C) erlaubt, und einer geometrischen Verformungskonfiguration wandelbar ist, die dem Deckel (3) erlaubt, mit der Innenfläche (20C) in im Wesentlichen dichten Kontakt zu kommen, wobei der Übergang von der einen Konfiguration zu der anderen durch das Steuerungsmittel (5) zur Versetzung des Deckels (3) gesteuert wird.
